# EUROPÄISCHE PATENTSCHRIFT

(11) **EP 3 269 948 B1**
(45) Veröffentlichungstag und Bekanntmachung des Hinweises auf die Patenterteilung: **30.03.2022**
(21) Anmeldenummer: 16020509.2
(22) Anmeldetag: 22.12.2016
(51) Int. Cl.: F01K 13/02

(54) **VERFAHREN ZUR ANPASSUNG DER LEISTUNG EINER DAMPFTURBINEN-KRAFTWERKSANLAGE UND DAMPFTURBINEN-KRAFTWERKSANLAGE**
METHOD FOR THE ADAPTATION OF THE PERFORMANCE OF A STEAM TURBINE POWER PLANT INSTALLATION AND STEAM TURBINE POWER PLANT INSTALLATION
PROCÉDÉ D'ADAPTATION DE LA PUISSANCE D'UNE CENTRALE À TURBINE À VAPEUR ET CENTRALE À TURBINE À VAPEUR

(30) Priorität: 15.07.2016 DE 102016008520; 10.10.2016 EP 16020391
(43) Veröffentlichungstag der Anmeldung: 17.01.2018
(73) Patentinhaber: Carbon-Clean Technologies GmbH, 50825 Köln (DE)
(72) Erfinder: PFAB, Robert Joseph, 50968 Köln (DE); ZOELLNER, Lars, 50678 Köln (DE); KNOP, Klaus, 79295 Sulzburg (DE)
(74) Vertreter: Von Rohr Patentanwälte Partnerschaft mbB

(56) Entgegenhaltungen:
- EP-A1- 2 101 051
- WO-A1-2013/135718
- DE-A1-102011 100 517
- DE-A1-102014 017 346
- DE-B3-102014 201 406

## Beschreibung

Die Erfindung betrifft ein Verfahren zur schnellen und flexiblen Anpassung der Leistung einer Dampfturbinen-Kraftwerksanlage, vorzugsweise zur Leistungsanpassung an veränderte Netzlasten, weiter vorzugsweise zur bedarfsabhängigen Bereitstellung von Netzregelleistung, besonders bevorzugt zur Bereitstellung von Primär- und/oder Sekundärregelleistung. Darüber hinaus betrifft die vorliegende Erfindung eine Dampfturbinen-Kraftwerksanlage mit wenigstens einer Dampfturbine und weiteren, für den Kraftwerksprozess erforderlichen Anlagenkomponenten, wie Speisewasservorwärmern, Verdampfern, Dampfüberhitzern, Pumpe und Kondensator sowie Speisewasserbehälter. Besonders bevorzugt betrifft die Erfindung ein mit Kohlenstaub gefeuertes Kraftwerk der Leistungsklasse größer 50 MW_{el.}, besonders bevorzugt größer 100 MW_{el.}, beispielsweise größer 400 MW_{el.}.

Aufgrund der Deregulierung des Strommarkts gewinnt ein flexibler Lastbetrieb der an das Stromnetz angeschlossenen Kraftwerke an Bedeutung. Hinzu kommt der Ausbau regenerativer Energien, wie beispielsweise der Windenergie, was zu höheren Anforderungen an die Fähigkeit zur Leistungsanpassung der unterschiedlichen Kraftwerkstypen führt. Durch die steigende Einspeisung regenerativer Energien in das Stromnetz werden konventionelle Energieerzeugungsanlagen zunehmend in ein Lastregime gezwungen, das von vielen Lastwechseln gekennzeichnet ist. Wenn die Netzlast, also der gesamte Stromverbrauch in einem Verbundnetz, unvorhergesehen ansteigt, also die momentan eingespeiste Leistung aller Kraftwerke übersteigt, führt dies zu einem leichten Abbremsen der Generatoren und damit zu einem Absinken der Netzfrequenz. Gleiches geschieht, wenn die Einspeisung unerwartet abnimmt, beispielsweise durch den Ausfall eines Kraftwerks. Umgekehrt steigt die Netzfrequenz an, wenn die Einspeisung höher ist als erwartet oder wenn die Last geringer ist. Um die Netzfrequenz ausreichend stabil zu halten, ist eine aktive Regelung notwendig, und zwar mit unterschiedlichen Beiträgen entsprechend bestimmter Zeitskalen. Für diese Regelung wird Regelenergie benötigt, nämlich bei zu niedriger Netzfrequenz zusätzliche Einspeisungen ins Stromnetz oder eine Reduktion der Netzlast, was jeweils als "positive Regelleistung" oder "-energie" bezeichnet wird. Bei zu hoher Netzfrequenz muss die Einspeisung reduziert oder die Netzlast erhöht werden, was als "negative Regelleistung" oder "-energie" bezeichnet wird.

Hinsichtlich der Frequenzregelung in Stromnetzen unterscheidet man unter anderen zwischen einer Primär- und einer Sekundärregelung. Die Primärregelegung muss üblicherweise eingreifen, wenn eine Frequenzabweichung von wenigstens 0,02 Hz auftritt. Eine Leistungsänderung muss dann innerhalb von 30 Sekunden proportional zur Abweichung der Netzfrequenz erfolgen, die bedarfsweise über 15 Minuten beibehalten werden muss. Die sogenannte "Sekundärregelung" erfolgt dagegen auf Ebene der Übertragungsnetze und reagiert deutlich langsamer. Die Sekundärregelung muss innerhalb von maximal 15 Minuten einsetzen.

Frequenzabweichungen werden zunächst durch die Primärregelung auf die an der Primärregelung beteiligten Kraftwerke im gesamten Stromnetz aufgeteilt. Diese stellen dafür eine sogenannte Primärregelreserve, also eine Leistungsreserve, zur Verfügung, welche von den beteiligten Kraftwerken automatisch an das Stromnetz abgegeben wird. Die Primärregelung dient der Stabilisierung der Netzfrequenz bei möglichst kleiner Abweichung, jedoch auf einem von einem vorgegebenen Netzfrequenznennwert abweichendem Niveau. Die sich an die Primärregelung anschließende Sekundärregelung hat dagegen die Aufgabe, das Gleichgewicht zwischen den Stromerzeugern und -verbrauchern im Stromnetz wieder herzustellen und dadurch die Netzfrequenz wieder auf den vorgegebenen Netzfrequenznennwert zurückzuführen. An der Sekundärregelung beteiligte Kraftwerke stellen hierzu eine Sekundärregelreserve zur Verfügung.

Aus der EP 2 101 051 A1 ist eine Vorrichtung bzw. ein Verfahren zur Nutzung von Überkapazitäten im Stromnetz bekannt, wobei im Falle eines Überangebots an Energie diese direkt über ein Heizelement in ein Wärmespeicher eingebracht wird. Im Entladungsfall wird die Wärme aus dem Wärmespeicher entnommen und einem thermodynamischen Kreisprozess einer Kraftwerksanlage zugeführt.

Die DE 10 2011 100 517 A1 offenbart ein Riegelsystem zur Anpassung der Leistung einer Dampfturbine, insbesondere zur kurzfristigen Anpassung der Leistung einer Kraftwerksturbine an geänderte Netzlasten im Rahmen der Primärregelung. Die einer Turbine abgezapfte Dampfmenge zur Vorwärmung des Speisewasserkreislaufs kann dabei bedarfsabhängig erhöht oder verringert werden. Ein Wärmespeicher kann bei einer Erhöhung der abgezapften Dampfmenge die zusätzliche abgezapfte Wärmeenergie thermisch speichern. Bei einer Verringerung der abgezapften Dampfmenge aus einer Turbine kann der Wärmespeicher die gespeicherte Wärme an die Vorwärmstrecke des Speisewasserkreislaufs abgeben. Der Wärmespeicher kann zusätzlich auch elektrisch mit Strom aus dem Verbundnetz geladen werden.

Die WO 2013/135718 A1 offenbart ein Energiespeicherkraftwerk zur elektrischen Stromgewinnung, welches auch zur Überführung von elektrischer Energie in thermische Energie geeignet ist. Die wenigstens zwei thermischen Speicher können mithilfe elektrischer Energie thermisch aufgeladen werden, um Energie zwischen zu speichern. Die gespeicherte Wärme kann an einen Wasserkreislauf eines Kraftwerks abgegeben werden, wodurch die gespeicherte Wärme in elektrischen Strom umgewandelt werden kann.

Es ist bekannt, dass eine Wirkleistungssteigerung beispielsweise eines Kohlekraftwerks aus einem beliebigen Leistungspunkt heraus länger dauert als beispielsweise bei Pumpspeicher- oder Gaskraftwerken, bei denen die Leistung bedarfsweise im Sekundenbereich abgerufen werden kann. Eine Änderung der Kohlebefeuerung führt erst nach einer Verzögerung im Minutenbereich zu einer Änderung der in die Stromnetze abgegebenen Wirkleistung bzw. der elektrischen Nettoleistung der Kraftwerksanlage, so dass die damit erreichbaren Leistungsrampen moderat sind. Leistungserhöhungen können so nur zeitverzögert in die entsprechenden Verteilnetze abgegeben werden. Das Gleiche gilt für eine Verringerung der in die Verteilnetze abgegebenen Leistung.

Ist es erforderlich, eine schnelle Leistungsänderung bereitzustellen, sind schnell wirkende Zusatzmaßnahmen erforderlich. Beispiele für solche Maßnahmen sind die Drosselung der Hochdruck-Turbinenregelventile, eine Überlasteinleitung zur Hochdruckteilturbine, der Kondensatstau oder auch die Androsselung der Anzapfdampfleitungen zu Hochdruck-Vorwärmern in der Vorwärmstrecke des Speisewassers.

So wird beispielsweise durch Kondensatstau kurzfristig, schnell und temporär mehr Dampf im Niederdruck- bzw. Mitteldruckteil der Turbine zur Verfügung gestellt. Voraussetzung ist aber, dass der Dampferzeuger ausreichend weit unterhalb der maximalen Dampferzeugerleistung betrieben wird. Auf Anforderung wird der Kondensatmassenstrom durch die Niederdruck-Vorwärmstrecke reduziert und damit auch der Anzapfdampfmassenstrom von Niederdruck- und Mitteldruckvorwärmern, wodurch mehr Dampf in der Turbine verbleibt und dadurch mehr Leistung erzeugt wird. Das Reduzieren des Kondensatmassenstroms ist erforderlich, damit sich die Wassertemperatur im Speisewasserbehälter nicht ändert und sich dadurch keine Rückwirkungen auf die Dampferzeugung ergeben. Das durch Reduzierung erhaltene zusätzliche Kondensat wird gespeichert. Aufgrund der beschränkten Volumina dieser Kondensatspeicher ist der Kondensatstau allerdings auf wenige Minuten begrenzt. Daher muss parallel zum Kondensatstau die Feuerungsrate des Dampferzeugers erhöht werden, um die gestiegene Leistungsanforderung längerfristig zu erfüllen und den Kondensatstau im Minutenbereich abzulösen. Da der Speisewasserbehälter nur mit einem reduzierten Kondensatmassenstrom bespeist wird, sinkt der Füllstand entsprechend ab. Mit steigender Dampferzeugerleistung kann die Androsselung der Kondensatregelstation wieder verringert werden, bis schließlich ein stationärer Betriebszustand erreicht ist. Um den Ursprungszustand wieder herzustellen, muss das gespeicherte Kondensat wieder zurück in den Speisewasserbehälter gefördert werden. Damit ist die durch den Kondensatstau kurzfristig zur Verfügung stellbare Mehrleistung der Kraftwerksanlage durch die maximale Dampferzeugerleistung begrenzt, da der Dampferzeuger den Kondensatstau in kurzer Zeit wieder ablösen muss.

Bei der Androsselung der Anzapfdampfleitungen zu den Hochdruck-Vorwärmern in der Speisewasservorwärmstrecke kommt es zu hohen thermischen Belastungen der Vorwärmer, wobei dem Dampferzeuger in diesem Fall kälteres Speisewasser zugeführt wird, so dass die Kesselfeuerung entsprechend überdimensioniert werden muss.

Kondensatstau und das bekannte Androsselungsverfahren führen zum Betrieb der Kraftwerksanlage mit vermindertem Wirkungsgrad.

Vor diesem Hintergrund liegt der Erfindung die Aufgabe zugrunde, ein Verfahren zur Anpassung der Leistung einer Dampfturbinen-Kraftwerksanlage und eine Dampfturbinen-Kraftwerksanlage zur Verfügung zu stellen, die eine schnelle und flexible Erhöhung oder Erniedrigung der Wirkleistung der Kraftwerksanlage bei hohem Wirkungsgrad der Energieerzeugung und in verfahrenstechnisch einfacher Weise ermöglichen. Insbesondere sollen Kraftwerksbetreibern durch das erfindungsgemäße Verfahren und die erfindungsgemäße Dampfturbinen-Kraftwerksanlage neue Optionen für einen wirtschaftlichen Kraftwerksbetrieb eröffnen werden.

Die vorgenannte Aufgabe wird durch ein Verfahren mit den Merkmalen von Anspruch 1 und durch eine Dampfturbinen-Kraftwerksanlage mit den Merkmalen von Anspruch 13 gelöst. Vorteilhafte Ausgestaltungen der Erfindung sind Gegenstand der Unteransprüche.

Erfindungsgemäß wird zur schnellen und flexiblen Erhöhung der Wirkleistung der Kraftwerksanlage, vorzugsweise zur Bereitstellung von positiver Netzregelleistung, besonders bevorzugt zur Bereitstellung von Primär- und/oder Sekundärregelleistung, eine Wärmeeinkopplung von bei der Entladung von wenigstens einem elektrisch beladbaren thermischen Speicher freigesetzter Wärme in eine Speisewasservorwärmstrecke der Kraftwerksanlage vorgesehen. Unter dem Begriff "elektrischen Nettoleistung der Kraftwerksanlage" bzw. "Wirkleistung" ist im Sinne der Erfindung die von der Kraftwerksanlage an das Stromnetz, insbesondere ein Stromverbundnetz, abgegebene elektrische Leistung zu verstehen. Die Beladung des Speichers erfolgt durch Zufuhr elektrischer Energie, die in thermische Energie auf hohem Temperaturniveau umgewandelt und gespeichert wird. Die Wärmeeinkopplung bei der Entladung des Speichers kann im Bereich einer Hochdruck-, Mitteldruck- und/oder Niederdruck-Vorwärmstrecke des Dampfturbinen-Kraftwerks erfolgen. Vorzugsweise erfolgt die Wärmeeinkopplung über einen Wärmeträger, insbesondere Heißluft.

Die erfindungsgemäß vorgeschlagene Kopplung des Kraftwerksprozesses mit einem Speicherkonzept, das wenigstens einen elektrisch beladbaren thermischen Speicher vorsieht, ist insbesondere bei mit Steinkohle oder Braunkohle befeuerten Kraftwerksanlagen vorteilhaft.

Besonders vorteilhaft ist die Wärmeeinkopplung aus elektrisch beladbaren thermischen Speichern bei Großkraftwerken der Leistungsklasse größer 50 MW_{el.}, besonders bevorzugt größer 100 MW_{el.}, beispielsweise größer 400 MW_{el.}.

Die erfindungsgemäße Dampfturbinen-Kraftwerksanlage weist dementsprechend wenigstens eine Dampfturbine und wenigstens einen elektrisch beladbaren thermischen Speicher auf, wobei entsprechende Einrichtungen zum Einkoppeln der bei der Entladung des thermischen Speichers freigesetzten thermischen Energie in die Speisewasservorwärmstrecke der Kraftwerksanlage vorgesehen sind.

Die Erfindung sieht den Einsatz von wenigstens einem elektrisch beladbaren thermischen Speicher vor, in dem Wärmeenergie vorgehalten wird und diese als alleinstehende oder aber auch als zusätzliche Maßnahme genutzt wird, um so die elektrische Nettoleistung bzw. die Wirkleistung der Kraftwerksanlage und damit insbesondere die Verfügbarkeit von Primär- und/oder Sekundärregelreserven zu erhöhen.

Im Vergleich zur dem bekannten Kondensatstauverfahren ermöglicht die erfindungsgemäß vorgeschlagenen Wärmeeinkopplung aus einem elektrisch beladbaren thermischen Speicher eine Leistungssteigerung der Kraftwerksanlage über einen längeren Zeitraum von bis zu einigen Stunden, wobei die mögliche Zeitdauer der Leistungserhöhung von der Speicherkapazität abhängt. Anders als beim bekannten Kondensatstauverfahren lässt es das erfindungsgemäße Verfahren zu, die Kraftwerksanlage über einen längeren Zeitraum auch bei maximaler Dampferzeugerleistung mit hohen Regelreserven zu betreiben. Im übrigen lässt sich durch die vorgeschlagene Einkopplung von Wärme aus dem Speicher in die Speisewasservorwärmstrecke der Kraftwerksanlage eine Steigerung der Wirkleistung erreichen, die der mit dem bekannten Kondensatstauverfahren erreichbaren Leistungssteigerung entspricht oder sogar noch darüber hinaus geht und 10% oder mehr betragen kann. Durch eine vergleichsweise einfache und kostengünstige Speichertechnologie lässt sich die erfindungsgemäß vorgesehene Wärmeeinkopplung aus einem thermischen Speicher auch als zusätzliche Maßnahme bei konventionell betriebenen Kraftwerken unter Ausnutzung der vorhandenen Kraftwerksperipherie nachrüsten. Damit wird eine sehr kostengünstige Möglichkeit geschaffen, die Anlagendynamik von Kraftwerksanlagen zu verbessern.

Die Reaktionszeit für eine Leistungsänderung durch Einkopplung von thermischer Wärme aus dem elektrisch beheizbaren Speicher kann sehr kurz sein und im Bereich zwischen beispielsweise 5 und 20 Sekunden liegen. Damit wird auch eine sehr schnelle Möglichkeit zur Anpassung der Wirkleistung der Kraftwerksanlage bereitgestellt.

Eine Skalierung des thermischen Speichers auf eine thermische Speicherkapazität von mehreren 100 MWh bis zu mehr als 1000 MWh ist möglich. Die thermische Leistung des Speichers kann mehr als 50 MW, vorzugsweise mehr als 100 MW, betragen. Um eine bestimmte Speicherkapazität vorzuhalten, können bedarfsweise mehrere thermische Speicher, auch modular ausgebildet, miteinander verschaltet werden. Die maximale Speichertemperatur kann im Bereich zwischen 1100 °C und 1300 °C, vorzugsweise bei ca. 1200 °C, liegen.

Der thermische Speicher kann bestrombare Heizleiter aufweisen, die in einer Schüttung aus einem wärmespeichernden Material angeordnet sind. Bei der Beladung des Speichers werden die Heizelemente bestromt und es wird die hierbei erzeugte Wärme der Heizleiter an die Schüttung übertragen. Bei der Entladung kann die heiße Schüttung dann insbesondere von Luft durchströmt werden, um Heißluft zu erzeugen, wobei in einem entsprechend ausgelegten Luft/Wasser-Wärmeübertrager eine nachfolgende indirekte Wärmeübertragung von der Heißluft auf das Speisewasser erfolgen kann. Auch andere Ausgestaltungen von elektrisch beladbaren thermischen Speichern sind möglich.

Bei konventionell betriebenen Dampfturbinen-Kraftwerksanlagen erfolgt üblicherweise zur Speisewasservorwärmung eine Entnahme von Anzapfdampf aus der Dampfturbine, mit dem wenigstens ein Speisewasser-Vorwärmer in der Speisewasservorwärmstrecke beheizt wird. Durch die Dampfentnahme kommt es zu einer Leistungsverringerung der Dampfturbine. Durch Einkoppeln der thermischen Energie des Speichers in die Speisewasservorwärmstrecke kann, insbesondere bei positivem Regelleistungsbedarf, eine zur Speisewasservorwärmung vorgesehene Dampfanzapfung der Dampfturbine verringert oder sogar völlig gestoppt werden, so dass die von der Dampfturbine erzeugte Kraftwerksleistung und damit auch die an das Stromnetz abgegebene Wirkleistung des Kraftwerks ansteigen.

Das erfindungsgemäße Verfahren kann in diesem Zusammenhang vorsehen, dass das Speisewasser bedarfsweise zur Erhöhung der elektrischen Leistung der Kraftwerksanlage in einer Bypassführung unter Umgehung wenigstens eines mit Anzapfdampf der Dampfturbine beheizbaren Speisewasservorwärmers der Vorwärmstrecke zum Speicher geführt und dabei erwärmt wird. Die Formulierung "zum Speicher geführt" ist weit auszulegen. Die Wärmeeinkopplung in das Speisewasser erfolgt vorzugsweise über einen gasförmigen Wärmeträger(kreislauf), der den Speicher durchströmt und hierbei erhitzt wird. Weiter insbesondere wird bei der Entladung des Speichers ein Heißluftstrom erzeugt, der in einem dem Speicher nachgeschalteten Wärmeübertrager die aufgenommene thermische Energie an das Speisewasser abgibt. Der Speicher wird dann von dem Speisewasser nicht durchströmt. Es kann eine speisewasserseitige Umgehung eines Hochdruck-, Mitteldruck- und/oder Niederdruckvorwärmers in der Speisewasservorwärmstrecke vorgesehen sein.

Es ist zweckmäßig im Sinne der Erfindung, wenn thermische Energie des Speichers vorrangig in einen Hochdruckbereich der Speisewasservorwärmstrecke eingekoppelt wird. Dies ermöglicht eine Androsselung einer Anzapfdampfleitung zu einem Hochdruckvorwärmer der Vorwärmstrecke. Vorzugsweise muss weniger bis gar kein energetisch höherwertiger Anzapfdampf auf hohem Druckniveau dem Hochdruckteil der Dampfturbine entnommen werden. Steht ausreichend thermische Energie des Speichers zur Verfügung, kann dann nachrangig auch thermische Energie in einen Mittel- und Niederdruckbereich der Speisewasservorwärmstrecke eingekoppelt werden. In konstruktiver Hinsicht weist die erfindungsgemäße Kraftwerksanlage zu diesem Zweck einen Bypass zur Umführung wenigstens eines Speisewasservorwärmers auf einer Hochdruckseite der Speisewasservorwärmung und, vorzugsweise, einen Bypass zur Umführung wenigstens eines weiteren Speisewasservorwärmers auf einer Mittel- oder Niederdruckseite der Speisewasservorwärmung auf.

Zur Verringerung der Wirkleistung der Kraftwerksanlage, insbesondere bei negativem Regelleistungsbedarf, wird der thermische Speicher mit von der Kraftwerksanlage erzeugter elektrischer Energie beladen. Zumindest ein Teil der elektrischen Leistung der Kraftwerksanlage wird dann nicht in das Stromnetz eingespeist, sondern dient zur Beladung des thermischen Speichers, so dass die Wirkleistung der Kraftwerksanlage sinkt. Bei einem verringerten Strombedarf im Stromnetz, insbesondere während Niedriglastzeiten und/oder bei hoher Netzfrequenz, lässt sich in einfacher Weise und aufgrund schneller Beladungszeiten sehr kurzfristig die Stromeinspeisung reduzieren und damit die Bereitstellung negativer Regelenergie realisieren.

Darüber hinaus kann der thermische Speicher, insbesondere bei negativem Regelleistungsbedarf, auch mit elektrischer Energie aus einem Stromnetz beheizt bzw. beladen werden. Durch die Beladung des Speichers mit elektrischer Energie aus dem Stromnetz lässt sich in sehr kurzer Zeit die Netzlast erhöhen und damit negative Primär- und/oder Sekundärregelleistung bereitstellen.

Durch die Möglichkeit der Wärmeeinkopplung in die Speisewasservorwärmung bei Entladung des thermischen Speichers und die Beladung des Speichers mit Strom kann auch bei einem Nennlastbetrieb der Kraftwerksanlage über einen vergleichsweise langen Zeitraum, der unter anderem von der Speicherkapazität abhängt, positive und negative Regelleistung angeboten werden. Wird die Kraftwerksanlage bei Nennlast oder auch im Bereich zwischen Nennlast und Mindestlast betrieben, kann zur Bereitstellung positiver Regelleistung eine Entladung des thermischen Speichers und zur Bereitstellung negativer Regelleistung eine Beladung des thermischen Speichers erfolgen. Durch die Einkopplung gespeicherter Wärme in den Prozess der Speisewasservorwärmung kann eine Leistungssteigerung von mehreren Prozent, insbesondere bis 10 % oder mehr, erreicht werden. In entsprechender Größenordnung lässt sich durch Beladung des thermischen Speichers die Wirkleistung der Kraftwerksanlage absenken.

Durch Absenken des Arbeits- bzw. Leistungspunktes, auf dem die Kraftwerksanlage betrieben wird, lässt sich mit dem erfindungsgemäßen Verfahren im Vergleich zu einem konventionellen Kraftwerksbetrieb, bei dem die bekannten Maßnahmen zur Verbesserung der Anlagendynamik, wie Kondensatstau und Drosselung der Turbinenregelventile, Anwendung finden, mehr positive und negative Regelleistung bzw. ein breiteres Regelband anbieten. Vorzugsweise liegt der Arbeitspunkt der Kraftwerksanlage bei dem erfindungsgemäßen Verfahren in einem Bereich von 90 % bis 100 % der Nennfeuerungsleistung der Kraftwerksanlage.

Die Verwendung von elektrisch beheizbaren thermischen Speichern erhöht die Flexibilität des Kraftwerks, ermöglicht insbesondere eine schnelle und flexible Verfügbarkeit insbesondere von Primärregelreserven, aber auch von Sekundärregelreserven, und stellt damit einen wirtschaftlichen Betrieb der Kraftwerksanlage sicher, insbesondere in einem geänderten Strommarkt. Durch die Kopplung des Kraftwerksprozesses mit elektrisch beladbaren thermischen Speichern wird insbesondere die Primär- und die Sekundärregelfähigkeit der Kraftwerksanlage verbessert und so Kraftwerksbetreibern eine neue Option für einen hochwirtschaftlichen Kraftwerksbetrieb eröffnet. Primär- und Sekundärregelreserven können als zusätzliche Netzdienstleistungen angeboten und verkauft werden.

Die Mindestlast der Kraftwerksanlage ist in erster Linie durch die Feuerung beschränkt und weist je nach Brennstoff unterschiedliche Grenzwerte auf. In Steinkohlekraftwerken ist die Mindestlast auf ca. 15 % der Nennfeuerungsleistung absenkbar. In Zeiten geringer Stromnachfrage, insbesondere dann, wenn der durch Einspeisung von Strom in ein Stromnetz erreichbare Strompreis unter den Stromgestehungskosten der Kraftwerksanlage liegt, weiter insbesondere in so genannten "Off-Peak-Zeiten", und, um ein shut-down des Kraftwerks zu vermeiden, werden Kraftwerke bei Mindestlast betrieben. Während eines Mindestlastbetrieb der Kraftwerksanlage kann dann bei konventionellen Kraftwerkskonzepten üblicherweise keine negative Regelleistung angeboten werden. Auch kann eine positive Regelleistung bei Minimallast nicht angeboten werden, da die maximalen Lastrampen vergleichsweise gering sind. Das erfindungsgemäße Verfahren ermöglicht es dagegen, dass der Speicher bei Mindestlastbetrieb der Kraftwerksanlage, insbesondere bei Niedrigtarif-Strompreisen, zur Bereitstellung negativer Regelleistung zumindest anteilig mit von der Kraftwerksanlage erzeugter elektrischer Energie beladen wird. Bei Betrieb der Kraftwerksanlage bei Mindestlast kann somit die an das Stromnetz abgegebene Wirkleistung der Kraftwerksanlage durch Beladung des thermischen Speichers mit im Kraftwerksprozess erzeugter elektrischer Energie verringert und so negative Regelleistung bereitgestellt werden. Negative Primär- und Sekundärregelreserven können als zusätzliche Netzdienstleistungen angeboten und verkauft werden, was zu einer hohen Wirtschaftlichkeit des Anlagenbetrieb führt.

Die Wirkleistung der Kraftwerksanlage kann bei Mindestlastbetrieb der Kraftwerksanlage in einfacher Weise durch Veränderung der Beladungsleistung des Speichers, d.h. die bei der Beladung des Speichers in thermische Energie umgesetzte Strommenge bezogen auf die Beladungszeit, an den Bedarf an Netzregelleistung angepasst werden. Der thermische Speicher kann vorzugsweise mit einem Anteil der von der Kraftwerksanlage bei Mindestlast erzeugten elektrischen Leistung von Null bis 100 % beladen werden. Während Niedertarifzeiten des Strompreises kann beispielsweise die gesamte elektrische Leistung der Kraftwerksanlage zur Bestromung des thermischen Speichers eingesetzt werden. Steigt der Strombedarf im Stromnetz an, lässt sich der Anteil der zur Bestromung des thermischen Speichers eingesetzten Kraftwerksleistung bedarfsweise auf Null reduzieren, so dass die gesamte Kraftwerksleistung wieder vollständig ins Stromnetz eingespeist werden kann. Durch die Möglichkeit zur schnellen Änderung der Beladungsleistung lässt sich die Wirkleistung der Kraftwerksanlage flexibel und sehr zeitnah an einen geänderten Bedarf im Stromnetz anpassen.

Beträgt beispielsweise die erzeugte elektrische Leistung der Kraftwerksanlage bei Mindestlast 15 % der Nennleistung, kann der thermische Speicher bei einem Mindestlastbetrieb der Kraftwerksanlage beispielsweise mit einem Anteil von 7,5 % der Nennleistung beladen werden. Die elektrische netto Wirkleistung der Kraftwerksanlage reduziert sich entsprechend auf 7,5 % der Nennleistung. Durch Erhöhen der Beladungsleistung des thermischen Speichers auf 15 % der Nennleistung lässt sich die Wirkleistung der Kraftwerksanlage auf Null senken. Ebenso gut ist es möglich, durch Verringerung der Beladungsleistung des Speichers die Wirkleistung der Kraftwerksanlage wieder zu erhöhen, bis maximal 15 % der Nennleistung, wenn die Beladung des thermischen Speichers gestoppt wird.

Die maximale Beladungsleistung des Speichers kann zumindest der Kraftwerksleistung bei Mindestlastbetrieb entsprechen. Die Beladungsleistung des thermischen Speichers reicht damit aus, um den gesamten von der Kraftwerksanlage bei Mindestlastbetrieb erzeugten Strom in Wärme umzuwandeln und zu speichern.

Die Bestromung des thermischen Speichers mit von der Kraftwerksanlage erzeugter elektrischer Energie führt zu einer Verringerung der Wirkleistung bzw. der Stromeinspeisung ins Stromnetz. Um darüber hinaus die Netzlast zu erhöhen und weitere negative Regelleistung bereitzustellen, kann bei einer ausreichend großen Beladungsleistung des thermischen Speichers der thermische Speicher bei einem Mindestlastbetrieb der Kraftwerksanlage zusätzlich mit elektrischer Energie aus dem Verbundstromnetz beladen werden. Die Bereitstellung zusätzlicher Regelleistung durch Entnahme von Strom aus dem Stromnetz zur Beladung des thermischen Speichers stellt eine neue Option für einen hochwirtschaftlichen Anlagenbetrieb dar, die bei den aus dem Stand der Technik bekannten Kraftwerkskonzepten nicht gegeben ist.

Im Übrigen kann sogar nach einem Abschalten des Kraftwerks eine Beladung des thermischen Speichers mit elektrischer Energie aus dem Stromnetz erfolgen, so dass negative Regelleistung auch im ausgeschalteten Zustand der Kraftwerksanlage bereitgestellt werden kann.

Für die Entladung des Speichers kann vorzugsweise vorgesehen sein, einen Luftstrom durch das heiße Wärmespeichermaterial zu leiten, so dass ein Heißluftstrom erzeugt wird. Liegt dieser auf einem erhöhten Druckniveau von beispielsweise mehr als 2 bar, vorzugsweise mehr als 3 bar, weiter vorzugsweise von 3,5 bar oder mehr vor, kann der Heißluftstrom vor der Wärmeeinkopplung in die Speisewasservorwärmstrecke in einem Expander entspannt werden, um bedarfsabhängig zusätzliche elektrische Energie zu erzeugen und damit die Wirkleistung der Kraftwerksanlage in noch stärkerem Maße flexibel an den Leistungsbedarf anpassen zu können. Darüber lässt sich so der Gesamtwirkungsgrad des Kraftwerksprozesses steigern. Insbesondere dann, wenn eine Entspannung des Heißluftstroms in einem Expander nicht vorgesehen ist, kann der Heißluftstrom auch auf einem erhöhten Druckniveau von beispielsweise mehr als 6 bar, vorzugsweise ca. 8 bar oder mehr, vorliegen.

Die Erfindung wird nachfolgend anhand der Zeichnung beispielhaft erläutert. Gleiche Anlagenkomponenten der gezeigten Ausführungsformen der Erfindung sind mit gleichen Bezugszeichen versehen. In der Zeichnung zeigen
- Fig. 1: ein vereinfachtes Anlagenschaubild einer erfindungsgemäßen Dampfturbinen-Kraftwerksanlage mit einem elektrisch beladbaren thermischen Speicher, wobei bei der Entladung freigesetzte thermische Energie zur Speisewasservorwärmung in eine Speisewasservorwärmstrecke der Kraftwerksanlage einkoppelbar ist,
- Fig. 2: ein vereinfachtes Anlagenschaubild einer modifizierten Ausführungsform der in Fig. 1 gezeigten Dampfturbinen-Kraftwerksanlage, wobei ein bei der Entladung des Speichers erzeugter Heißluftstrom vor der Wärmeeinkopplung in einem Expander entspannt wird,
- Fig. 3: ein vereinfachtes Verfahrensfließbild eines erfindungsgemäßen Verfahrens zur schnellen und flexiblen Anpassung der Leistung einer Dampfturbinen-Kraftwerksanlage,
- Fig. 4: ein vereinfachtes Verfahrensfließbild des in Fig. 3 gezeigten Verfahrens, wobei ein bei der Entladung eines thermischen Speichers erzeugter Heißluftstrom vor der Wärmeeinkopplung in einem Expander entspannt wird,
- Fig. 5: eine schematische Darstellung der Verbesserung der Anlagendynamik bei Dampfturbinen-Kraftwerksanlagen durch Verwendung elektrisch beladbarer thermischer Speicher zur Speisewasservorwärmung und
- Fig. 6: eine schematische Darstellung der Verbesserung der Anlagendynamik durch Verwendung elektrisch beladbarer thermischer Speicher zur Speisewasservorwärmung beim Betrieb von Dampfturbinen-Kraftwerksanlagen nahe Nennlast.

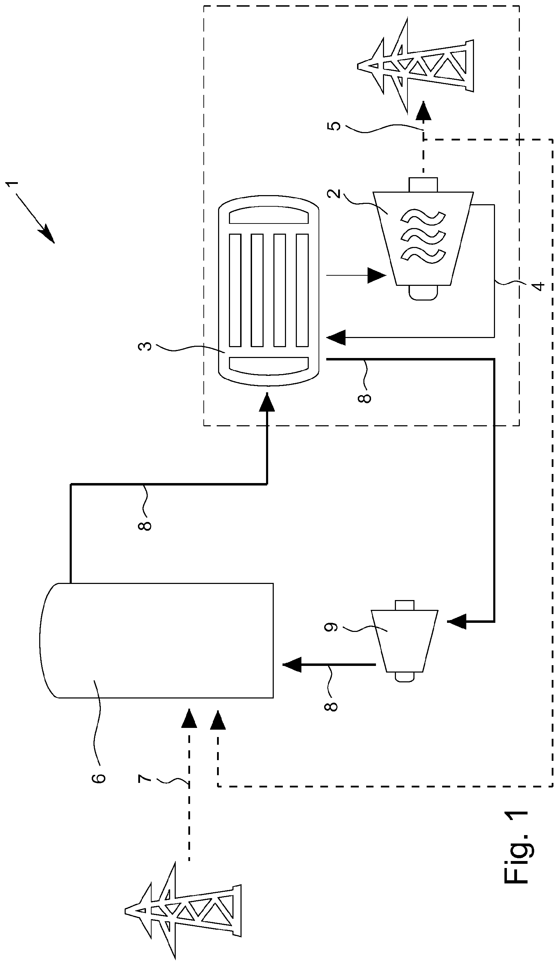

Fig. 1 zeigt ein vereinfachtes Anlagenschaubild einer Dampfturbinen-Kraftwerksanlage 1 mit einer schematisch dargestellten Dampfturbine 2, die einen Hochdruckteil, einen Mitteldruckteil und einen Niederdruckteil aufweisen kann. Darüber hinaus ist schematisch eine Speisewasservorwärmstrecke 3 eines Wasser-Dampf-Arbeitskreislaufs 4 gezeigt, in der Speisewasser für die nachfolgende Verdampfung vorgewärmt wird. Die im Kraftwerksprozess erzeugte elektrische Nettoleistung bzw. die Wirkleistung 5 wird in ein Stromverbundnetz eingespeist. Weitere für die Stromerzeugung im Dampfkraftprozess erforderliche Anlagenkomponenten sind in Fig. 1 nicht gezeigt.

Zur schnellen und flexiblen Anpassung der Wirkleistung 5 der Kraftwerksanlage 1, weiter vorzugsweise zur bedarfsweisen Bereitstellung von positiver und negativer Netzregelleistung, ist wenigstens ein elektrisch beladbarer thermischer Speicher 6 vorgesehen. Zur Beladung des Speichers 6 kann elektrische Leistung 7 aus dem Stromverbundnetz 7 entnommen werden und erfindungsgemäß wird ein Teil der von der Kraftwerksanlage 1 erzeugten elektrischen Energie eingesetzt, was zu einem Absinken der in das Stromverbundnetz eingespeisten Wirkleistung 5 führt.

Der elektrische Speicher 6 kann wenigstens einen elektrischen Heizleiter zur Umwandlung elektrischer Energie in thermische Energie und ein Wärmespeichermaterial, insbesondere eine Schüttung aus einem wärmespeichernden Material, aufweisen. Die erreichbare Speichertemperatur kann zwischen 1000 °C und 1300 °C, vorzugsweise zwischen 1100 °C und 1200 °C, liegen. Zur Entladung des Speichers 6 wird ein Luftstrom 8 durch das heiße Wärmespeichermaterial geführt und hierbei auf eine Temperatur von vorzugsweise mehr als 400 °C, insbesondere mehr als 700 °C, erwärmt. Der Luftstrom 8 kann dem Speicher 6 bei einem Druck von größer 6 bar, insbesondere von ca. 8 bar, zugeführt werden. Zur Verdichtung des Luftstroms 8 ist ein Verdichter 9 vorgesehen. Der aus dem Speicher 6 austretende heiße Luftstrom 8 dient zur Speisewasservorwärmung. In der Speisewasservorwärmstrecke 3 erfolgt eine vorzugsweise indirekte Wärmeübertragung von dem heißen Luftstrom 8 auf das flüssige Speisewasser.

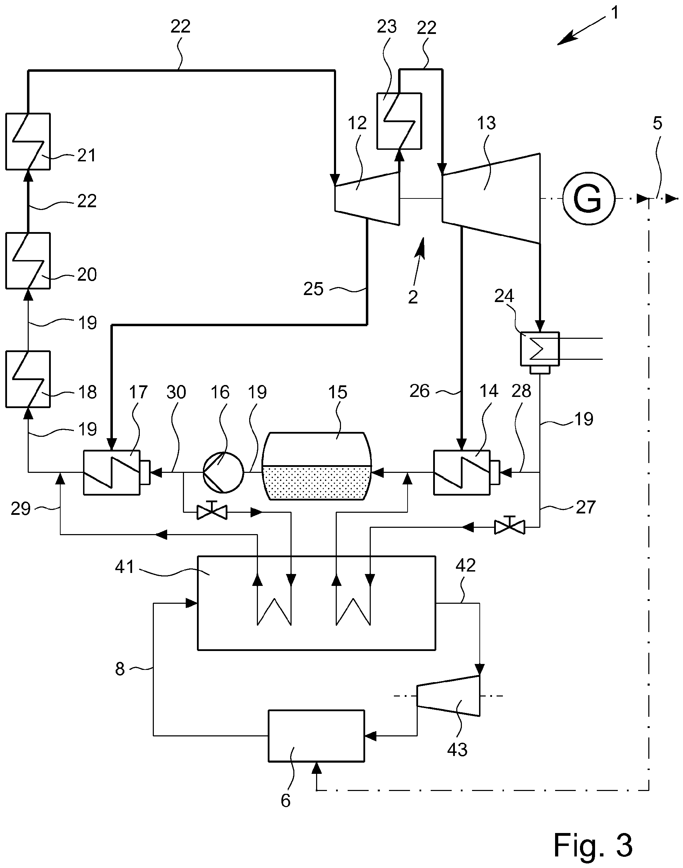

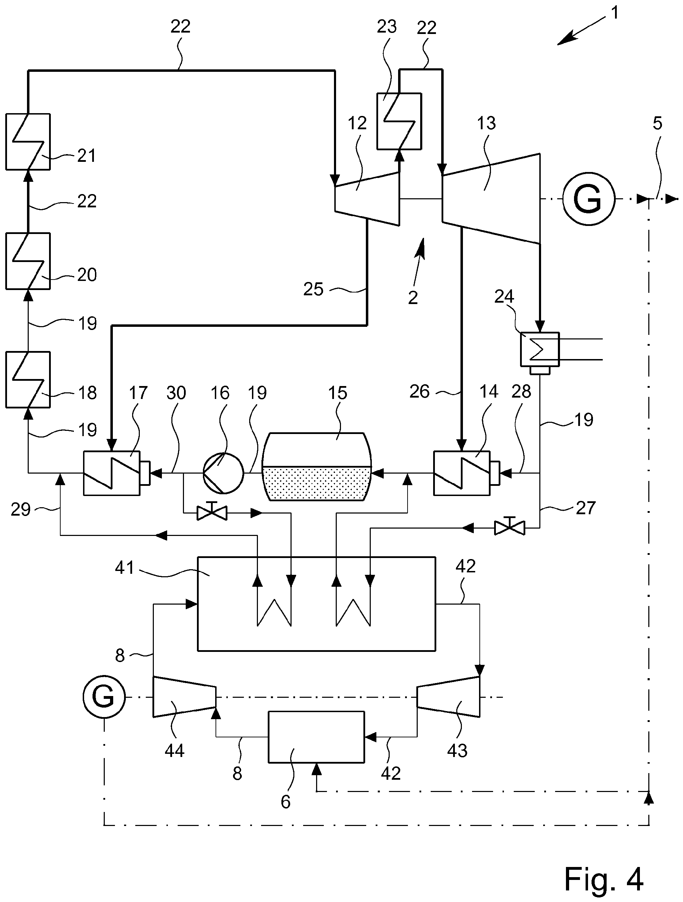

Wie nachfolgend anhand von Fig. 3 und Fig. 4 noch im Einzelnen erläutert wird, ermöglicht die Einkopplung von Wärmeenergie aus dem Speicher 6 in den Kraftwerksprozess zur Speisewasservorwärmung eine schnelle und bedarfsabhängige Erhöhung der elektrischen Leistung der Kraftwerksanlage 1, insbesondere die Bereitstellung positiver Regelleistung. Darüber hinaus lässt sich die Wirkleistung 5 der Kraftwerksanlage, insbesondere zur Bereitstellung negativer Regelleistung, durch die Beladung des Speichers 6 mit von der Kraftwerksanlage 1 erzeugtem Strom bedarfsabhängig verringern und so die Einspeisung von Strom in das Stromnetz reduzieren. Durch Beladung des Speichers 6 mit elektrischer Leistung 7 aus dem Stromnetz lässt sich darüber hinaus die Netzlast erhöhen und damit negative Regelleistung bereitstellen.

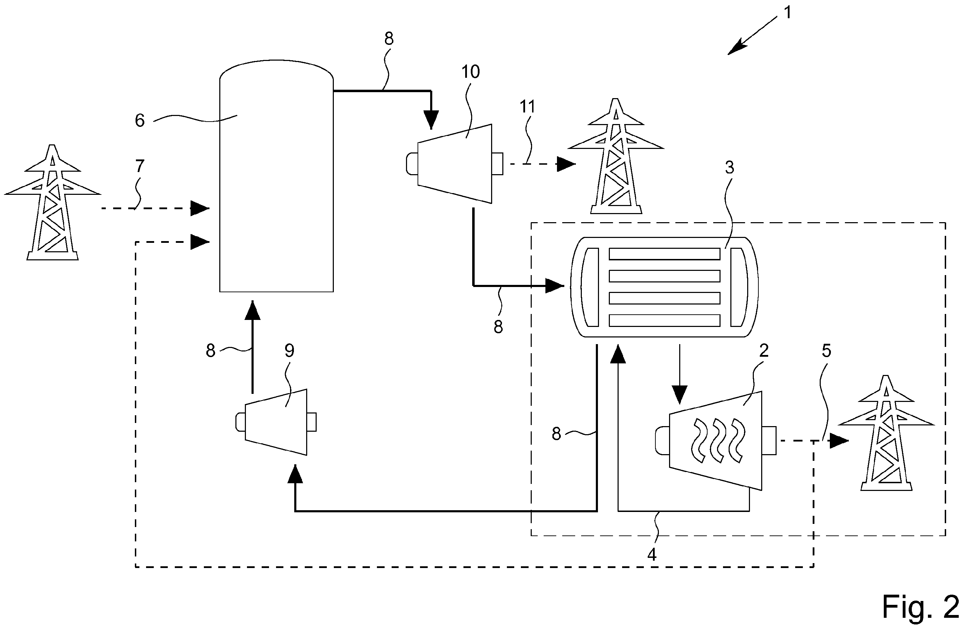

Bei der in Fig. 2 gezeigten Kraftwerksanlage 1 ist zur Wirkungsgraderhöhung und zur Steigerung der Flexibilität bei der Leistungsanpassung der Kraftwerksanlage 1 wenigstens ein Expander 10 vorgesehen, um den verdichteten und im Speicher 6 erhitzten Luftstrom 8 nach dem Austritt aus dem Speicher 6 und vor der Wärmeübertragung an das Speisewasser zu entspannen. Die hierbei erzeugte elektrische Leistung 11 kann in das Stromnetz eingespeist werden. Der Luftstrom 8 wird dem Speicher 6 bei dieser Ausführungsform bei einem Druck von größer 2 bar, insbesondere von größer 3 bar, beispielsweise von 3,5 bar zugeführt.

In den Fign. 3 und 4 ist ein vereinfachtes Verfahrensfließbild eines Dampfkraftprozesses zur schnellen und flexiblen Anpassung der Wirkleistung 5 einer Dampfturbinen-Kraftwerksanlage 1 gezeigt. Es versteht sich, dass die Kraftwerksanlage 1 weitere nicht dargestellte Anlagenapparate und -komponenten aufweisen kann, die zur Verwirklichung des Dampfkraftprozesses erforderlich sind.

Anhand Fig. 3 wird nachfolgend ein konventionell betriebener Dampfkraftprozess erläutert. Die Dampfkraftanlage 1 weist eine Dampfturbine 2 mit wenigstens einem Hochdruckteil 12 und wenigstens einem Mittel- und Niederdruckteil 13 auf. Eine Speisewasservorwärmstrecke 3 der Kraftwerksanlage 1 weist wenigstens einen Niederdruckvorwärmer 14, einen Speisewasserbehälter 15, eine Pumpe 16 und wenigstens einen Hochdruckvorwärmer 17 auf. Zur weiteren Speisewasservorwärmung dient ein Economizer 18. Nach der Vorwärmung wird Speisewasser 19 in einem Verdampfer 20 verdampft und in einem Überhitzer 21 in an sich üblicher Weise über die Verdampfungstemperatur hinaus erhitzt. Überhitzter Dampf 22 wird dann zunächst im Hochdruckteil 12 der Dampfturbine 2 entspannt und anschließend in einem Zwischenüberhitzer 23 wieder erwärmt. Der Dampf 22 wird dann in dem Mittel- und Niederdruckteil 13 der Dampfturbine 2 vollständig entspannt und in dem Kondensator 24 kondensiert. Das bei der Kondensation gebildete Speisewasser 19 gelangt über den Niederdruckvorwärmer 14 in den Speisewasserbehälter 15. Mit der Pumpe 16 wird das Speisewasser 19 aus dem Speisewasserbehälter 15 über den Hochdruckvorwärmer 17 dem Economizer 18 zugeführt.

Bei dem konventionell betriebenen Dampfkraftprozess erfolgt die Beheizung des Hochdruckvorwärmers 17 und des Niederdruckvorwärmers 14 durch Entnahme von Anzapfdampf 25, 26 aus dem Hochdruckteil 12 und dem Mittel- und Niederdruckteil 13 der Dampfturbine 2. Durch die Dampfentnahme kommt es zu einer Leistungsverringerung der Dampfturbine 2. Um die von der Kraftwerksanlage 1 erzeugte Wirkleistung 5 zu erhöhen, ist aus dem Stand der Technik das Kondensatstauverfahren bekannt. Hierbei wird der Kondensatmassenstrom durch den Niederdruckvorwärmer 14 reduziert. In der Folge kann der Anzapfdampfmassenstrom des Niederdruckvorwärmers 14 entsprechend reduziert werden, so dass mehr Dampf 22 in der Dampfturbine 2 verbleibt und dadurch mehr elektrische Leistung von der Dampfturbine 2 erzeugt wird. Die durch den Kondensatstau zur Verfügung stellbare Mehrleistung ist durch Speichervolumina für den Kondensatmassenstrom und die maximale Dampferzeugerleistung begrenzt. Darüber hinaus ist aus dem Stand der Technik zur Erhöhung der Wirkleistung 5 bekannt, die Anzapfdampfmengen zu dem Hochdruckvorwärmer 17 zu drosseln, wobei es jedoch zu hohen thermischen Belastungen des Hochdruckvorwärmers 17 kommt. Im übrigen muss die Kesselfeuerung entsprechend überdimensioniert werden, da der Dampferzeuger 20 in diesem Fall kälteres Speisewasser 19 erhält.

Um die Möglichkeit zu schaffen, kurzfristig, schnell und temporär eine Leistungsanpassung der Kraftswerksanlage 1 zu erreichen, insbesondere bedarfsabhängig positive und/oder negative Netzregelleistung bereitzustellen, ist bei der in Fig. 3 gezeigten Kraftwerksanlage 1 abweichend von dem oben beschriebenen konventionell betriebenen Dampfkraftprozess die bedarfsweise Wärmeeinkopplung aus einem elektrisch beladbaren thermischen Speicher 6 vorgesehen. Der Speicher 6 kann nach Aufbau und Funktionsweise dem anhand der Fign. 1 und 2 beschriebenen thermischen Speicher 6 entsprechen. Über einen Bypass kann Speisewasser 19 unter Umgehung des Niederdruckvorwärmers 14 zu einem Wärmeübertrager 41 geführt und durch Wärmeübertragung von dem im Speicher 6 erhitzten Heißluftstrom 8 vorgewärmt werden. Über einen weiteren Bypass kann Speisewasser 19 nach der Pumpe 16 unter Umgehung des Hochdruckvorwärmers 17 zum Wärmeübertrager 41 geführt und dort weiter erwärmt werden. Anschließend gelangt das erwärmte Speisewasser 19 dann in den Economizer 18. Hierbei lässt es das gezeigte Anlagenkonzept zu, einen Teilmassenstrom 27 des Speisewassers 19 an dem Niederdruckvorwärmer 14 vorbei über den Wärmeübertrager 41 zu führen, dabei zu erwärmen und anschließend zum Speisewasserbehälter 15 zu führen, wobei der verbleibende Teilmassenstrom 28 des Speisewassers 19 über den Niederdruckvorwärmer 14 geführt und dabei erwärmt wird. In Abhängigkeit von der Speicherkapazität kann auch der gesamte Speisewasserstrom über den Wärmeübertrager 41 geführt und durch Wärmeübertragung vom Heißluftstrom 8 erwärmt werden. Das Gleiche kann für den Hochdruckbereich der Speisewasservorwärmstrecke 3 gelten. Es kann ein Teilmassenstrom 29 des Speisewassers 19 nach der Pumpe 16 an dem Hochdruckvorwärmer 17 vorbei über den Wärmeübertrager 41 zum Economizer 18 geführt werden, wobei der verbleibende Teilmassenstrom 30 über den Hochdruckvorwärmer 17 geführt und dabei erwärmt wird. In Abhängigkeit von der Speicherkapazität kann auch der gesamte Speisewasserstrom nach der Pumpe 16 über den Wärmeübertrager 41 geführt und dabei erwärmt werden. Da ansonsten große Speicherkapazitäten erforderlich sind, ist vorzugsweise vorgesehen, dass lediglich die Teilmassenströme 27, 29 des Speisewassers 19 über den Wärmeübertrager 41 geführt und dabei erwärmt werden.

Erfindungsgemäß wird ein Teil der von der Dampfturbine 2 erzeugten elektrischen Leistung zur Beladung des Speichers 6 genutzt, so dass die Wirkleistung 5 der

Kraftwerksanlage 1 verringert wird. Auch eine Beladung mit elektrischer Leistung aus einem Stromnetz ist möglich. Mit dem in Fig. 3 gezeigten Anlagenkonzept lassen sich eine schnelle und flexible Änderung der Wirkleistung 5 der Kraftwerksanlage 1 erreichen und eine hohe Verfügbarkeit von Regelreserven gewährleisten, so dass ein sehr wirtschaftlicher Betrieb der Kraftwerksanlage erreicht werden kann.

Die Reaktionszeit für eine Steigerung oder Verringerung der elektrischen netto Wirkleistung 5 der Kraftwerksanlage 1 kann im Bereich von 5 bis 20 Sekunden liegen. Die maximale Entladedauer des Speichers 6 ist abhängig von der Wärmespeicherkapazität des Speichers 6 und kann mehrere Stunden betragen. Gemäß Fig. 3 wird ein kälterer Luftstrom 42 nach dem Durchströmen des Wärmeübertragers 41 in einem Verdichter 43 verdichtet und gelangt dann zum Speicher 6. Hierbei kann das Druckniveau des Luftstroms 42 nach der Verdichtung im Bereich zwischen 6 bis 10 bar, insbesondere bei ca. 8 bar, liegen. In Fig. 4 ist eine andere Ausführungsform gezeigt, wobei der Luftstrom 42 nach dem Verdichten im Verdichter 43 und der Aufheizung im Speicher 6 in einem Expander 44 entspannt wird. Anschließend gelangt der heiße Luftstrom 8 zum Wärmeübertrager 41. Bei dieser Ausführungsform kann das Druckniveau des Luftstroms 42 nach der Verdichtung im Bereich zwischen 2 und 5 bar, insbesondere zwischen 3 und 4 bar, liegen und beispielsweise 3,5 bar betragen.

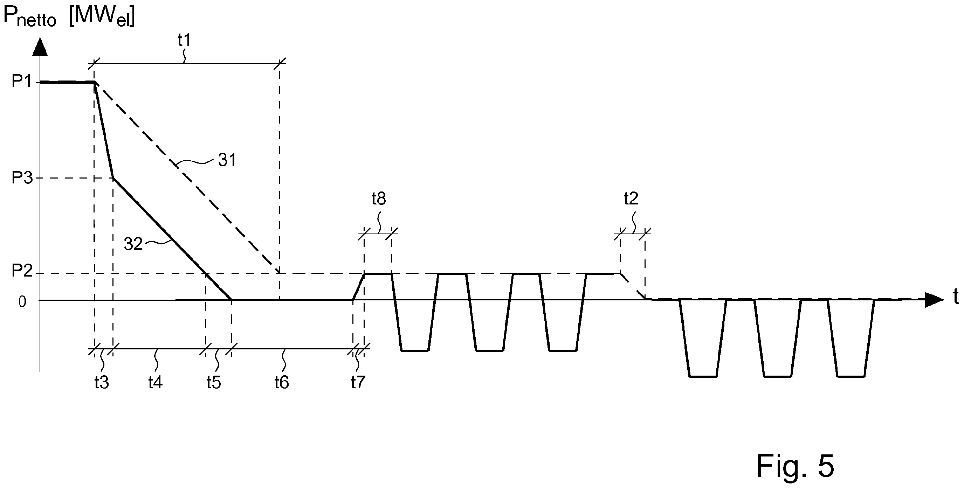

Fig. 5 zeigt schematisch die Verbesserung der Anlagendynamik von Dampfturbinenkraftwerksanlagen durch Verwendung elektrisch beladbarer thermischer Speicher zur Speisewasservorwärmung. Aus Fig. 4 ergibt sich der Leistungsverlauf 31 der elektrischen Nettoleistung Pₙₑₜₜₒ (Wirkleistung) einer konventionell betriebenen Kraftwerksanlage und der Leistungsverlauf 32 der elektrischen Nettoleistung Pₙₑₜₜₒ (Wirkleistung) einer modifizierten Kraftwerksanlage in Abhängigkeit von unterschiedlichen Maßnahmen zur Verbesserung der Anlagendynamik, wobei bei der modifizierten Kraftwerksanlage als Maßnahme zur Verbesserung der Anlagendynamik die Beladung und die Entladung wenigstens eines elektrisch beladbaren Speichers wie oben beschrieben vorgesehen ist. Die konventionelle Kraftwerksanlage kann dagegen an sich aus dem Stand der Technik bekannte Maßnahmen zur Verbesserung der Anlagendynamik, insbesondere Kondensatstau, vorsehen.

Dargestellt ist der Betrieb der Kraftwerksanlagen bei Lastzuständen zwischen der Nennfeuerungsleistung einer Kraftwerksfeuerung bzw. der Nennlast und der Mindestlast. Bei Nennlast wird von der konventionell betriebenen Kraftwerksanlage eine Wirkleistung P1 ins Stromnetz eingespeist, die der Nennleistung der Kraftwerksanlage entspricht. Ist eine Leistungsverringerung erforderlich, lässt sich die Wirkleistung P1 beispielsweise durch Reduzierung des Kondensatmassenstroms und Verringerung der Feuerungsrate des Dampferzeugers über die Zeitdauer t1 auf die Wirkleistung P2 absenken, die der Leistung der konventionellen Kraftwerksanlage bei Mindestlast entspricht. Eine weitere Reduzierung der Wirkleistung der konventionellen Kraftwerksanlage ist nur durch Abschalten der Kraftwerksanlage möglich, wobei die Wirkleistung der Kraftwerksanlage von der Wirkleistung P2 im Mindestlastbetrieb über einen Zeitraum t2 auf Null abgesenkt werden kann.

Eine Leistungsverringerung der modifizierten Kraftwerksanlage lässt sich durch elektrische Beladung des thermischen Speichers über eine Zeitdauer t3 erreichen, wobei die Wirkleistung P1 allein durch die zur Beladung des Speichers eingesetzte Strommenge auf eine verringerte Wirkleistung P3 absinkt. Wie sich aus Fig. 4 weiter ergibt, führt die Verringerung der Wirkleistung durch Beladung des Speichers bei der modifizierten Kraftwerksanlage zu einer deutlich schnelleren Leistungsreduzierung im Vergleich zu der konventionell betriebenen Kraftwerksanlage. Eine weitere Verringerung der Wirkleistung ist dann durch Verringerung der Feuerungsleistung des Dampferzeugers über einen Zeitraum t4 möglich, bis die Wirkleistung P2 bei Mindestlastbetrieb erreicht ist.

Darüber hinaus kann der thermische Speicher auch bei einem Mindestlastbetrieb zumindest anteilig mit von der Kraftwerksanlage erzeugter elektrischer Energie beladen werden, so dass die Wirkleistung der modifizierten Kraftwerksanlage durch die Bestromung des Speichers von der Wirkleistung P2 über einen Zeitraum t5 weiter auf Null reduziert werden kann. Es wird dann bei fortgesetztem Mindestlastbetrieb die gesamte von der modifizierten Kraftwerksanlage erzeugte elektrische Energie zur Beladung des Speichers eingesetzt und kein Strom in das Stromnetz eingespeist, was einer Wirkleistung von Null entspricht. Die Beladung des Speichers mit der gesamten von der Kraftwerksanlage erzeugten elektrischen Energie kann in Abhängigkeit von der Speicherkapazität über einen Zeitraum t6 oder auch länger beibehalten werden, wobei der Zeitraum t6 vorzugsweise mehrere Stunden betragen kann.

Wie sich aus dem mittleren Bereich des in Fig. 5 dargestellten Leistungsverlaufs 32 der modifizierten Kraftwerksanlage ergibt, kann bedarfsabhängig die Beladung des thermischen Speichers gestoppt und damit die Wirkleistung der modifizierten Kraftwerksanlage von Null wieder auf die Wirkleistung P2 gesteigert werden, und zwar über einen vergleichsweise kurzen Zeitraum t7. Die Kraftwerksanlage kann nun beispielsweise über den Zeitraum t8 weiter bei Mindestlast betrieben werden und hierbei die Wirkleistung P2 ins Stromnetz einspeisen. Die Wirkleistung lässt sich durch Veränderung der Beladungsleistung des thermischen Speichers in einfacher Weise schnell an den momentanen Bedarf an Netzregelleistung anpassen. Hierbei lassen sich vorzugsweise Null bis 100 % der Kraftwerksleistung bei Mindestlastbetrieb für die Beladung des thermischen Speichers einsetzen, so dass eine bedarfsorientierte Anpassung der Wirkleistung über einen großen Leistungsbereich möglich ist.

Wie sich zudem aus Fig. 5 ergibt, kann die maximale Beladeleistung des thermischen Speichers auch größer als die Kraftwerksleistung bei Mindestlastbetrieb sein, so dass der thermische Speicher insbesondere zur Bereitstellung zusätzlicher Netzregelleistung mit elektrischer Energie aus dem Stromverbundnetz beladen werden kann. Während des Mindestlastbetriebs der modifizierten Kraftwerksanlage kann damit mehr negative Regelleistung angeboten werden, was in Fig. 4 durch negative Werte für den Leistungsverlauf 32 der modifizierten Kraftwerksanlage schematisch gezeigt ist.

Darüber hinaus kann auch nach Abschaltung der modifizierten Kraftwerksanlage die elektrische Beladung des thermischen Speichers mit Strom aus dem Stromverbundnetz fortgesetzt werden, so dass weiterhin negative Regelleistung angeboten werden kann.

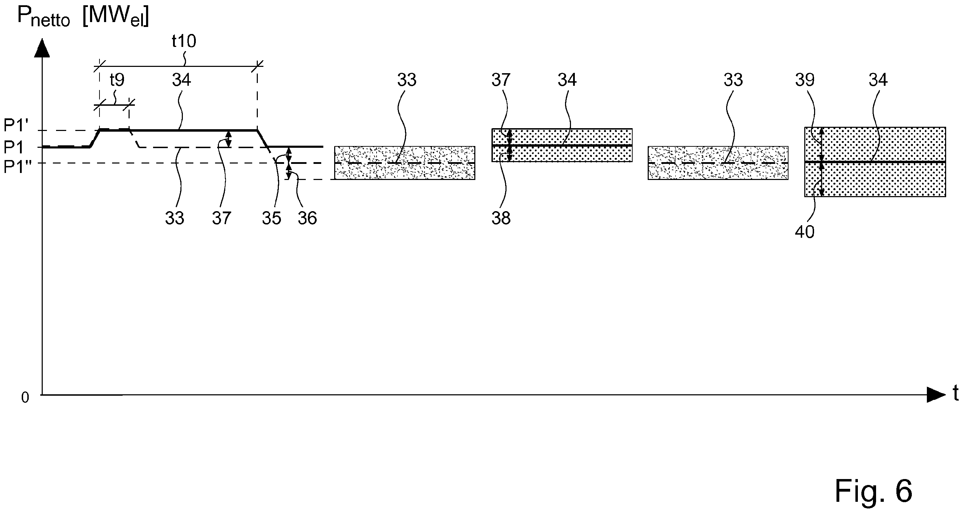

Fig. 6 zeigt schematisch die Möglichkeit zur Leistungsanpassung der elektrischen Nettoleistung Pₙₑₜₜₒ (Wirkleistung) bei einer konventionell betriebenen Dampfturbinen-Kraftwerksanlage durch Kondensatstau (Leistungsverlauf 33) und bei einer modifizierten Dampfturbinen-Kraftwerksanlage durch Kopplung mit einem elektrisch beladbaren thermischen Speicher (Leistungsverlauf 34).

Bei Nennlastbetrieb der konventionell betriebenen Kraftwerksanlage ist durch das Kondensatstauverfahren eine Erhöhung der Wirkleistung von der Nennleistung P1 auf die Leistung P1' für eine vergleichsweise kurze Zeitdauer t9 möglich, wobei die Zeitdauer t9 bei üblicher Kraftwerksauslegung den Bereich von wenigen Minuten nicht überschreitet. Die Leistungserhöhung kann ca. 10 % der Nennleistung P1 betragen. Eine entsprechende Leistungsverringerung von der Nennleistung P1 auf die reduzierte Leistung P1" ist möglich durch andere schnell wirkende Maßnahmen zur Bereitstellung von Leistungsänderungen, wie z.B. die Drosselung der Hochdruck-Turbinenregelventile. Um über längere Zeit eine positive Regelreserve bereitzustellen, müssen konventionelle Kraftwerksanlagen üblicherweise unterhalb der Nennfeuerungsleistung betrieben werden, beispielsweise bei der reduzierten Leistung P1".

Die mit den bei konventionell betriebenen Kraftwerksanlagen vorgesehenen Maßnahmen zur Verbesserung der Anlagendynamik erreichbaren positiven und negativen Regelreserven sind in Fig. 6 schematisch durch die Pfeile 35, 36 gekennzeichnet.

Die modifizierte Kraftwerksanlage kann aufgrund der Wärmeeinkopplung aus einem elektrisch beladbaren thermischen Speicher in die Speisewasservorwärmstrecke über einen deutlich längeren Zeitraum t10, der mehrere Stunden umfassen kann, bei einer Wirkleistung P1' oberhalb der im Nennlastbetrieb erreichbaren Wirkleistung P1 betrieben werden. Die Leistungserhöhung durch Einkoppeln von Wärme aus dem thermischen Speicher kann dem Leistungsanstieg durch Kondensatstau bei konventionellen Kraftwerksanlagen entsprechen oder auch darüber liegen. In der gleichen Größenordnung kann sich die Wirkleistung P1 der Kraftwerksanlage durch Beladung des thermischen Speichers mit im Kraftwerksprozess erzeugter elektrischer Energie verringern lassen. Dies ist in Fig. 6 durch die Pfeile 37, 38 schematisch gezeigt. Im Ergebnis kann der Arbeitspunkt der modifizierten Kraftwerksanlage gegenüber dem Arbeitspunkt konventionell betriebener Kraftwerksanlagen erhöht werden, wobei dasselbe Regelleistungsband angeboten werden kann.

Alternativ ist es möglich, ein breiteres Regelleistungsband anzubieten, wenn der Arbeitspunkt der modifizierten Kraftwerksanlage entsprechend auf den Arbeitspunkt der konventionell betriebenen Kraftwerksanlage abgesenkt wird. Diese Möglichkeit ist in Fig. 6 schematisch durch die Pfeile 39, 40 wiedergegeben.

### Bezugszeichenliste:

- 1: Kraftwerksanlage
- 2: Dampfturbine
- 3: Speisewasservorwärmstrecke
- 4: Wasser-Dampf-Arbeitskreislauf
- 5: Wirkleistung
- 6: Speicher
- 7: Leistung
- 8: Luftstrom
- 9: Verdichter
- 10: Expander
- 11: Leistung
- 12: Hochdruckteil
- 13: Mittel- und Niederdruckteil
- 14: Niederdruckvorwärmer
- 15: Speisewasserbehälter
- 16: Pumpe
- 17: Hochdruckvorwärmer
- 18: Economizer
- 19: Speisewasser
- 20: Verdampfer
- 21: Überhitzer
- 22: Dampf

- 23: Zwischenerhitzer
- 24: Kondensator
- 25: Anzapfdampf
- 26: Anzapfdampf
- 27: Teilmassenstrom
- 28: Teilmassentstrom
- 29: Teilmassenstrom
- 30: Teilmassenstrom
- 31: Leistungsverlauf
- 32: Leistungsverlauf
- 33: Leistungsverlauf
- 34: Leistungsverlauf
- 35: Leistungszunahme
- 36: Leistungsabnahme
- 37: Leistungszunahme
- 38: Leistungsabnahme
- 39: Leistungszunahme
- 40: Leistungsabnahme
- 41: Wärmeübertrager
- 42: Luftstrom
- 43: Verdichter
- 44: Expander

## Patentansprüche

1. Verfahren zur schnellen und flexiblen Anpassung der Leistung einer Dampfturbinen-Kraftwerksanlage (1), vorzugsweise zur Leistungsanpassung an veränderte Netzlasten, weiter vorzugsweise zur bedarfsabhängigen Bereitstellung von Netzregelleistung, besonders bevorzugt zur Bereitstellung von Primär- und/oder Sekundärregelleistung, wobei eine Wärmeeinkopplung von bei der Entladung von wenigstens einem elektrisch beladbaren thermischen Speicher (6) freigesetzter Wärme in eine Speisewasservorwärmstrecke (3) der Kraftwerksanlage (1) vorgesehen wird, **dadurch gekennzeichnet, dass** der Speicher (6) mit von der Kraftwerksanlage (1) erzeugter elektrischer Energie beladen wird.

2. Verfahren nach Anspruch 1, **dadurch gekennzeichnet, dass** bei einer Wärmeeinkopplung aus dem Speicher (6) eine zur Speisewasservorwärmung vorgesehene Dampfanzapfung einer Dampfturbine (2) der Kraftwerksanlage (1) verringert oder gestoppt wird.

3. Verfahren nach Anspruch 1 oder 2, **dadurch gekennzeichnet, dass** das Speisewasser für die Wärmeeinkopplung in einer Bypassführung unter Umgehung wenigstens eines mit Anzapfdampf (25, 26) der Dampfturbine (2) beheizbaren Speisewasservorwärmers (14, 17) der Speisewasservorwärmstrecke (3) zum Speicher (6) geführt wird.

4. Verfahren nach einem der vorhergehenden Ansprüche, **dadurch gekennzeichnet, dass** bei der Entladung des Speichers (6) freigesetzte thermische Energie vorrangig in einen Hochdruckbereich der Speisewasservorwärmstrecke (3) eingekoppelt wird.

5. Verfahren nach einem der vorhergehenden Ansprüche, **dadurch gekennzeichnet, dass** der Speicher (6) bedarfsabhängig mit elektrischer Energie aus einem Stromnetz, insbesondere einem Verbundstromnetz, beladen wird.

6. Verfahren nach einem der vorhergehenden Ansprüche, **dadurch gekennzeichnet, dass** die Kraftwerksanlage (1) bei Nennlast oder im Bereich zwischen Nennlast und Mindestlast betrieben wird und dass der Speicher (6) zur Bereitstellung positiver Regelleistung zumindest teilweise entladen und zur Bereitstellung negativer Regelleistung zumindest teilweise beladen wird.

7. Verfahren nach einem der vorhergehenden Ansprüche, **dadurch gekennzeichnet, dass** der Speicher (6) bei Mindestlastbetrieb der Kraftwerksanlage (1) zur Bereitstellung negativer Regelleistung zumindest anteilig mit von der Kraftwerksanlage (1) erzeugter elektrischer Energie beladen wird.

8. Verfahren nach Anspruch 7, **dadurch gekennzeichnet, dass** die Nettoleistung der Kraftwerksanlage (1) bei Mindestlastbetrieb der Kraftwerksanlage (1) durch Veränderung der Beladungsleistung des Speichers (6) an den Bedarf an Netzregelleistung angepasst wird.

9. Verfahren nach einem der vorhergehenden Ansprüche, **dadurch gekennzeichnet, dass** die Beladungsleistung des Speichers (6) zumindest der Kraftwerksleistung (1) bei Mindestlastbetrieb entspricht.

10. Verfahren nach einem der vorhergehenden Ansprüche, **dadurch gekennzeichnet, dass** die Beladungsleistung des Speichers (6) größer als die Kraftwerksleistung (1) bei Mindestlastbetrieb ist und dass der Speicher (6) bei einem Mindestlastbetrieb der Kraftwerksanlage (1), insbesondere zur Bereitstellung zusätzlicher negativer Regelleistung, mit elektrischer Energie aus einem Stromnetz, insbesondere einem Verbundstromnetz, beladen wird.

11. Verfahren nach einem der vorhergehenden Ansprüche, **dadurch gekennzeichnet, dass** der Speicher (6) nach einem Abschalten der Kraftwerksanlage (1) mit elektrischer Energie aus einem Stromnetz, insbesondere einem Verbundstromnetz, beladen wird.

12. Verfahren nach einem der vorhergehenden Ansprüche, **dadurch gekennzeichnet, dass** thermische Energie bei der Entladung des Speichers (6) an einen verdichteten Luftstrom (8) übertragen wird und dass der verdichtete Luftstrom (8) zur Bereitstellung zusätzlicher Regelleistung vor der nachfolgenden Wärmeeinkopplung in die Speisewasservorwärmstrecke entspannt wird.

13. Dampfturbinen-Kraftwerksanlage (1) mit wenigstens einer Dampfturbine (2), insbesondere ausgebildet zur Durchführung des Verfahrens nach einem der vorhergehenden Ansprüche, und mit wenigstens einem elektrisch beladbaren thermischen Speicher (6), wobei bei der Entladung des Speichers (6) freigesetzte Wärme in eine Speisewasservorwärmstrecke (3) der Kraftwerksanlage (1) zur Beheizung des Speisewassers einkoppelbar ist, **dadurch gekennzeichnet, dass** Mittel vorgesehen sind, um den Speicher (6) mit von der Kraftwerksanlage (1) erzeugter elektrischer Energie zu beladen.

14. Kraftwerksanlage nach Anspruch 13, **dadurch gekennzeichnet, dass** die Speisewasservorwärmstrecke (3) wenigstens einen mit Anzapfdampf der Dampfturbine (2) beheizbaren Speisewasservorwärmer (14, 17) aufweist und dass eine zumindest teilweise speisewasserseitige Bypassführung des Speisewassers (19) an dem Speisewasservorwärmer (14, 17) vorbei über den Speicher (6) vorgesehen ist.

## Claims

1. Method for the rapid and flexible adaptation of the output of a steam turbine power plant (1), preferably for adapting the output to changed network loads, further preferably for the demand-dependent provision of network control power, particularly preferably for the provision of primary and/or secondary control power, wherein a heat coupling of heat released during the discharge of at least one electrically chargeable thermal accumulator (6) into a feedwater preheating section (3) of the power plant (1) is provided, **characterized in that** the accumulator (6) is charged with electrical energy generated by the power plant (1).

2. Method according to claim 1, **characterized in that**, in the case of a heat coupling from the storage tank (6), a steam tapping of a steam turbine (2) of the power plant (1) provided for feedwater preheating is reduced or stopped.

3. Method according to claim 1 or 2, **characterized in that** the feed water for the heat coupling is led to the accumulator (6) in a bypass conduit bypassing at least one feed water preheater (14, 17) of the feed water preheating section (3) which can be heated with bleed steam (25, 26) of the steam turbine (2).

4. Process according to one of the preceding claims, **characterized in that** thermal energy released during the discharge of the accumulator (6) is coupled primarily into a high-pressure region of the feedwater preheating section (3).

5. Method according to one of the preceding claims, **characterized in that** the storage device (6) is loaded with electrical energy from an electricity grid, in particular an interconnected electricity grid, as a function of demand.

6. Method according to one of the preceding claims, **characterized in that** the power plant (1) is operated at nominal load or in the range between nominal load and minimum load, and **in that** the accumulator (6) is at least partially discharged to provide positive control power and at least partially charged to provide negative control power.

7. Method according to one of the preceding claims, **characterized in that** the storage unit (6) is loaded at least proportionally with electrical energy generated by the power plant (1) during minimum load operation of the power plant (1) in order to provide negative control power.

8. Method according to claim 7, **characterized in that** the net power of the power plant (1) is adapted to the demand for grid control power during minimum load operation of the power plant (1) by changing the loading power of the accumulator (6).

9. Method according to one of the preceding claims, **characterized in that** the loading power of the accumulator (6) corresponds at least to the power plant power (1) during minimum load operation.

10. Method according to one of the preceding claims, **characterized in that** the loading power of the storage unit (6) is greater than the power plant power (1) during minimum load operation, and **in that** the storage unit (6) is loaded with electrical energy from an electricity grid, in particular an interconnected electricity grid, during minimum load operation of the power plant (1), in particular for providing additional negative control power.

11. Method according to one of the preceding claims, **characterized in that** the accumulator (6) is charged with electrical energy from an electricity grid, in particular an interconnected electricity grid, after the power plant (1) has been switched off.

12. Method according to any one of the preceding claims, **characterized in that** thermal energy is transferred to a compressed air flow (8) during discharge of the accumulator (6), and **in that** the compressed air flow (8) is expanded to provide additional control power prior to subsequent heat coupling into the feedwater preheating section.

13. Steam turbine power plant (1) having at least one steam turbine (2), in particular designed to carry out the process according to one of the preceding claims, and having at least one electrically chargeable thermal accumulator (6), wherein heat released during the discharge of the accumulator (6) can be coupled into a feed water preheating section (3) of the power plant (1) for heating the feed water, **characterized in that** means are provided for charging the accumulator (6) with electrical energy generated by the power plant (1).

14. Power plant according to claim 13, **characterized in that** the feedwater preheating section (3) has at least one feedwater preheater (14, 17) which can be heated with bleed steam from the steam turbine (2), and **in that** an at least partial feedwater-side bypass of the feedwater (19) past the feedwater preheater (14, 17) via the accumulator (6) is provided.

## Revendications

1. Procédé d'adaptation rapide et flexible de la puissance d'une centrale électrique à turbine à vapeur (1), de préférence d'adaptation de la puissance à des charges de réseau modifiées, de préférence encore de fourniture d'une puissance de réglage de réseau selon les besoins, de manière particulièrement préférée de fourniture d'une puissance de réglage primaire et/ou secondaire, dans lequel un couplage de la chaleur dégagée lors de la décharge d'au moins un accumulateur (6) thermique pouvant être chargé électriquement dans une section de préchauffage d'eau d'alimentation (3) de la centrale électrique (1), **caractérisé en ce que** l'accumulateur (6) est chargé en énergie électrique produite par la centrale électrique (1).

2. Procédé selon la revendication 1, **caractérisé en ce que** lors du couplage de la chaleur provenant de l'accumulateur (6), un prélèvement de vapeur d'une turbine à vapeur (2) de la centrale électrique (1) fourni pour préchauffer l'eau d'alimentation est réduit ou arrêté.

3. Procédé selon la revendication 1 ou 2, **caractérisé en ce que** l'eau d'alimentation pour le couplage de la chaleur est acheminée dans une conduite de dérivation en contournant au moins un préchauffeur d'eau d'alimentation (14, 17) de la section de préchauffage d'eau d'alimentation (3) pouvant être chauffé avec de la vapeur prélevée (25, 26) de la turbine à vapeur (2) vers l'accumulateur (6).

4. Procédé selon l'une quelconque des revendications précédentes, **caractérisé en ce que** l'énergie thermique dégagée lors de la décharge de l'accumulateur (6) est principalement couplée dans une zone haute pression de la section de préchauffage d'eau d'alimentation (3).

5. Procédé selon l'une quelconque des revendications précédentes, **caractérisé en ce que** l'accumulateur (6) est chargé en énergie électrique provenant d'un réseau électrique, en particulier d'un réseau électrique combiné, selon les besoins.

6. Procédé selon l'une quelconque des revendications précédentes, **caractérisé en ce que** la centrale électrique (1) fonctionne à charge nominale ou dans la plage entre la charge nominale et la charge minimale et que l'accumulateur (6) est au moins partiellement déchargé pour fournir une puissance de réglage positive et est au moins partiellement chargé pour fournir une puissance de réglage négative.

7. Procédé selon l'une quelconque des revendications précédentes, **caractérisé en ce que** l'accumulateur (6) est chargé au moins proportionnellement avec de l'énergie électrique produite par la centrale électrique (1) lors du fonctionnement à charge minimale de la centrale électrique (1) pour fournir une puissance de réglage négative.

8. Procédé selon la revendication 7, **caractérisé en ce que** la puissance nette de la centrale électrique (1) lors du fonctionnement à charge minimale de la centrale électrique (1) est adaptée aux besoins en puissance de réglage du réseau par modification de la capacité de charge de l'accumulateur (6).

9. Procédé selon l'une quelconque des revendications précédentes, **caractérisé en ce que** la capacité de charge de l'accumulateur (6) correspond au moins à la capacité de la centrale électrique (1) lors du fonctionnement à charge minimale.

10. Procédé selon l'une quelconque des revendications précédentes, **caractérisé en ce que** la capacité de charge de l'accumulateur (6) est supérieure à la puissance de la centrale électrique (1) lors du fonctionnement à charge minimale et que l'accumulateur (6), lors du fonctionnement à charge minimale de la centrale électrique (1), en particulier pour fournir une puissance de réglage négative supplémentaire, est chargé en énergie électrique provenant d'un réseau électrique, en particulier d'un réseau électrique combiné.

11. Procédé selon l'une quelconque des revendications précédentes, **caractérisé en ce que** l'accumulateur (6) est chargé en énergie électrique provenant d'un réseau électrique, en particulier d'un réseau électrique combiné, après l'arrêt de la centrale électrique (1).

12. Procédé selon l'une quelconque des revendications précédentes, **caractérisé en ce que** l'énergie thermique est transférée à un flux d'air (8) comprimé lorsque l'accumulateur (6) est déchargé et que le flux d'air (8) comprimé se dilate pour fournir une puissance de réglage supplémentaire avant le couplage de chaleur ultérieure dans la section de préchauffage de l'eau d'alimentation.

13. Centrale électrique à turbine à vapeur (1) comportant au moins une turbine à vapeur (2), en particulier conçue pour mettre en œuvre le procédé selon l'une quelconque des revendications précédentes, et comportant au moins un accumulateur (6) thermique pouvant être chargé électriquement, dans laquelle la chaleur dégagée lors du déchargement de l'accumulateur (6) peut être couplée dans une section de préchauffage d'eau d'alimentation (3) de la centrale électrique (1) pour chauffer l'eau d'alimentation, **caractérisée en ce que** des moyens sont fournis pour charger l'accumulateur (6) en énergie électrique produite par la centrale électrique (1).

14. Centrale électrique selon la revendication 13, **caractérisée en ce que** la section de préchauffage d'eau d'alimentation (3) comporte au moins un préchauffeur d'eau d'alimentation (14, 17) pouvant être chauffé par la vapeur prélevée de la turbine à vapeur (2) et qu'une conduite de dérivation de l'eau d'alimentation (19) se trouvant au moins partiellement côté eau d'alimentation est située sur le préchauffeur d'eau d'alimentation (14, 17) en passant par l'accumulateur (6).
